# EUROPÄISCHE PATENTSCHRIFT

(11) **EP 1 505 135 B1**
(45) Veröffentlichungstag und Bekanntmachung des Hinweises auf die Patenterteilung: **26.10.2011**
(21) Anmeldenummer: 04015939.4
(22) Anmeldetag: 07.07.2004
(51) Int. Cl.: C09J 5/00, B29C 45/00, B29C 65/00

(54) **Verbindung**
Connection
Connection

(30) Priorität: 05.08.2003 DE 10335716
(43) Veröffentlichungstag der Anmeldung: 09.02.2005
(73) Patentinhaber: Eichenauer Heizelemente GmbH & Co. KG, 76870 Kandel (DE)
(72) Erfinder: Starck, Roland, 76756 Bellheim (DE); Poujol, Christian, 76829 Landau (DE); Flick, Franz, 76877 Offenbach (DE)
(74) Vertreter: Lempert, Jost

(56) Entgegenhaltungen:
- EP-A- 0 471 430
- EP-A- 1 249 647
- GB-A- 2 019 769
- GB-A- 2 041 285
- US-A- 4 416 713
- US-A- 5 807 639

## Beschreibung

Die vorliegende Erfindung betrifft eine Vorrichtung mit einem metallischen Bauteil, welches mit einer elektrischen Heizeinheit wärmeleitend verbunden ist, wobei das metallische Bauteil in Form eines fluidführenden Rohres oder eines Gehäuses der elektrischen Heizeinheit ausgebildet ist, und einer das Bauteil im Vesentlichen umgebenden, mit dem Bauteil dichtend verbundenen Umhüllungsschicht aus thermoplastischem Kunststoff. Die Erfindung bezieht sich ferner auf ein Verfahren zum dichtenden Verbinden von wenigstens einem metallischen Bauteil, welches mit einer elektrischen Heizeinheit wärmeleitend verbunden und in Form eines fluidführenden Rohres oder eines Gehäuses der elektrischen Heizeinheit ausgebildet ist, und einer das Bauteil im Wesentlichen umgebenden Umhüllungsschicht aus thermoplastischem Kunststoff.

Im Zuge einer Vielfalt von Ausgestaltungen auf'unterschiedlichsten Gebieten in der Technik werden bestimmte Bauteile, beispielsweise zu Schutz- oder Isolationszwecken, mit einer Umhüllungsschicht versehen, wobei die Bestrebungen vielfach dahingehen, eine gut dichtende Verbindung, z.B. eine gegen das Eindringen von Fluiden gesicherte Verbindung, zwischen dem entsprechenden Bauteil und der Umhüllungsschicht zu schaffen. Da es sich jedoch bei den für das Bauteil bzw. die Umhüllungsschicht Verwendung findenden Materialen in der Regel um unterschiedliche Materialen mit entsprechend unterschiedlichen Materialeigenschaften, insbesondere thermischen Eigenschaften, handelt, sind mit der Schaffung einer solchen dichtenden Verbindung in der Regel erhebliche Schwierigkeiten verbunden. So entsteht beispielsweise beim Umspritzen eines metallischen Bauteils mit einem Kunststoff keine dichtende Verbindung zwischen der aufgebrachten Kunststoffschicht und der Metalloberfläche. Zusätzlich entstehen bedingt durch die unterschiedlichen Ausdehnungskoeffizienten des Kunststoffs und des Metalls bei der Abkühlung oder Erwärmung des umspritzten Bauteils regelmäßig Spalten entlang der Verbindungslinie von Metall und Kunststoff, so dass Gas oder Flüssigkeit in den Bereich zwischen Bauteil und Umhüllungsschicht eindringen kann, was unter Umständen zu einer Zerstörung oder Fehlfunktion des Bauteils oder einer mit einem derartigen Bauteil ausgestatteten Vorrichtung führen kann, insbesondere wenn es sich bei dem Bauteil um eine elektrische Einheit handelt.

Beispielhaft sei hier aus Gründen der Anschauung als Bauteil auf eine Heizeinrichtung für Fluide, insbesondere Gase, Bezug genommen, wobei ein fluidführendes Metallrohr aus Aluminium oder einem anderen gut wärmeleitendem Material, das in direktem Kontakt mit einer elektrischen Heizeinheit steht, in eine Umhüllung aus Kunststoff im Spritzgussverfahren eingespritzt ist. Aufgrund der Tatsache, dass das Metallrohr mit einer elektrischen Heizeinheit in wärmeleitender Verbindung steht, wobei letztere das in dem Metallrohr geführte Fluid erwärmen soll, ist die Betriebstemperatur der Heizeinrichtung und damit auch die Temperatur entlang der Verbindungslinie von Metall und Kunststoff ständig hohen Schwankungen unterworfen. Gleichzeitig müssen aus Gründen der Betriebssicherheit auch die elektrischen Kontakte der Heizeinheit mit in die Kunststoffumhüllung eingespritzt werden. Aufgrund der im Vergleich mit den entsprechenden Werten für Aluminium sehr viel höheren Ausdehnungskoeffizienten der Kunststoffumhüllung ist die Schaffung einer dichtenden Verbindung besonders schwierig. Somit ist die beschriebene Anordnung extrem anfällig für das Auftreten von Spalten, durch die dann Gas oder Flüssigkeit aus dem fluidführenden Metallrohr nach außen dringen und/oder bis an die elektrische Heizeinheit gelangen kann. In gleicher Weise kann auch ein Fluid von außen entlang eines Spaltes zwischen den Kontakten der Heizeinheit und der Kunststoffumhüllung bis zur Heizeinheit vordringen, beispielsweise aufgrund von Kapillareffekten, und dort zu einer Schädigung oder einem Kurzschluss führen.

Aus diesem Grund wurde in der EP 1 249 647 A2 vorgeschlagen, ein mit Kunststoff zu umspritzendes Metallteil vor dem Aufspritzen der Kunststoffumhüllung mit einem elastischen Schlauch aus Silikon zu überziehen. Durch den Einspritzdruck wird dann der Schlauch verformt, und es bildet sich eine kraftschlüssige Verbindung sowohl zwischen dem Metallteil und dem elastischen Schlauch als auch zwischen dem Schlauch und dem aufgespritzten Kunststoff. Es hat sich jedoch in der Praxis gezeigt, dass diese Maßnahme nicht ausreicht, um eine befriedigende gas- und flüssigkeitsdichte Verbindung zwischen Bauteil und Umhüllungsschicht herzustellen.

Ein ähnliches Verfahren ist auch Gegenstand der DE-OS 28 19 017, in der zusätzlich noch das Schaffen einer adhäsiven Verbindung zwischen der elastischen (Schlauch-)Schicht und dem zu umhüllenden Bauteil vorgeschlagen wurde.

Ein anderes Verfahren zur Verbindung eines metallischen Bauteils in Form eines Rohres mit einem Kunststoffkörper ist aus der GB 2 019 769 A bekannt. Gemäß dieser Druckschrift wird das Metallrohr an einem Umfangsabschnitt desselben durch Spritzgießen des Kunststoffmaterials um den Umfangsabschnitt des Rohres derart eingespritzt, dass der umspritzte Umfangsabschnitt des Rohres unter dem Einspritzdruck elastisch verformt wird, um eine gasdichte Verbindung zwischen dem - lokal verformten - Rohr und dem umspritzten Kunststoffkörper zu erhalten. Gemäß einer Ausführungsvariante kann das metallische Rohr an seinem zur Verbindung mit dem Kunststoffkörper vorgesehenen Umfangsabschnitt vor dem Spritzgießvorgang mit einer gummielastischen Schicht versehen werden, welche dann ihrerseits anlässlich des Spritzgießvorgangs elastisch verformt wird, um für eine gasdichte Verbindung zu sorgen.

Der Erfindung liegt die Aufgabe zugrunde, eine gegenüber dem vorstehend genannten Stand der Technik verbesserte dichtende Verbindung zwischen dem mit der elektrischen Heizeinheit versehenen metallischen Bauteil und der dieses umgebenden Umhüllungsschicht zu schaffen, die sich durch erhöhte Betriebssicherheit und verlängerte Standzeit auszeichnet.

Diese Aufgabe wird bei einer Vorrichtung der eingangs genannten Art durch eine zwischen dem Bauteil und der umspritzten oder spritzgegossenen Umhüllungsschicht angeordnete und zumindest an der Umhüllungsschicht haftende Haftschicht gelöst, wobei die Umhüllungsschicht eine Polyamidschicht ist und die Haftschicht aus einem in Wasser und/oder Alkohol lösbaren Polyamid-Mischpolymerisat oder aus einem Hotmelt-Klebstoff auf Polydefinbasis gebildet ist.

Bei einem Verfahren der eingangs genannten Art ist zur Lösung der Aufgabe vorgesehen, dass vor einem Aufbringen der Umhüllungsschicht eine zumindest an der Umhüllungsschicht haftende Haftschicht aus einem in Wasser und/oder Alkohol lösbaren Polyamid-Mischpolymerisat oder einem Hotmelt-Klebstoff auf Polydefinbasis auf das Bauteil aufgebracht wird, und dass die Umhüllungsschicht nach Aufbringen der Haftschicht als Polyamidschicht durch Umspritzen oder Spritzgießen aufgebracht wird.

Dadurch wird zuverlässig eine Spaltbildung an den Übergängen zwischen Bauteil und Umhüllungsschicht mit in der Regel unterschiedlichen Wärmeausdehnungskoeffizienten, insbesondere im gefährdeten äußeren Bereich zwischen Haft- und Umhüllungsschicht, verhindert.

Da beim Einspritzen ein erhöhter Druck und üblicherweise erhöhte Temperaturen von bis zu und über 200°C vorhanden sind, müssen auch die Haftschichtmaterialien diesen Bedingungen standhalten. Die Haftschicht hat nicht die Funktion des Zusammenhaltens zweier Bauteile (diese ist in der Regel durch die Formschlüssigkeit gegeben), sondern die Funktion der Abdichtung. Erschwerend kommt hier noch das Verfahren des Einspritzens hinzu: Die Verbindung muss nicht nur beim Zusammenfügen zweier vorgefertigter Teile dicht sein, sondern auch wenn die Umhüllungsschicht mit erhöhtem Druck und Temperatur aufgespritzt wird.

Die erfindungsgemäß vorausgesetzte elastische Verformung ist nur dann gegeben, wenn das Haftschichtmaterial bei den Einspritztemperaturen noch nicht zu schmelzen beginnt, sondern seine Form beibehält, wie diese bei duroplastischen Kunststoffen der Fall ist. Bei der erfindungsgemäßen Haftschicht handelt es sich um eine dünne Schicht mit einem thermoplastischen Verhalten, d.h. sie ist fließend und dichtet so in flüssiger Form den Zwischenraum ab.

Die erfindungsgemäße, dichtend ausgebildete Verbindung zwischen dem metallischen Bauteil und der Umhüllungsschicht eignet sich insbesondere für Materialkombinationen, bei denen Bauteil und Umhüllungsschicht unterschiedliche thermische Ausdehnungskoeffizienten aufweisen, wie dies der Fall ist , wenn bei einem metallischen Bauteil die Umhüllungsschicht eine Kunststoffschicht ist.

Um erfindungsgemäß möglichst gute Hafteigenschaften der Haftschicht sowohl am Bauteil als auch an der Umhüllungsschicht zu erreichen, kann entweder vorgesehen sein, dass es sich bei der Haftschicht um Schmelzklebstoffe auf Polyolefinbasis, sogenannte Hotmelt-Klebstoffe, handelt oder es kommen Polyamid-Mischpolymerisate, die in Wasser und/oder Alkohol gelöst werden können, zum Einsatz. Ein besonderer Schwerpunkt liegt auf der Verwendung von Polyamid-Mischpolymerisaten aus alkoholischen Lösungen wie Ethanol. Diese sind extrem umweltverträglich und werden deshalb sogar im Lebensmittelbereich, z.B. als Behälterbeschichtungen, eingesetzt. Schutzmaßnahmen bei der Verarbeitung und Entsorgung müssen daher nicht getroffen werden.

Ein Polyamid-Mischpolymerisat ist kein Klebstoff, sondern ein Polyamid-Kunststoff, der durch chemische Veränderung in Alkohol löslich wird, was bei einem "normalen" Polyamid-Kunststoff nicht möglich ist, d.h. es ist ein in Alkohol gelöstes, flüssiges Polyamid. Dieses flüssige Polyamid wird als dünne Schicht auf das Metallteil aufgebracht, kann aber nach dem Trocknen ohne weiteres wieder abgezogen werden, d.h. es klebt nicht an dem Metallteil fest. Erst durch das Aushärten verbindet es sich im Oberflächenbereich mit dem Metallteil und haftet dann daran fest.

Bei der angesprochenen bevorzugten Verwendung von Polyamid-Mischpolymerisaten für die Haftschicht und dem Vorsehen einer Umhüllungsschicht aus Polyamid besitzen die Umhüllungsschicht und die Haftschicht eine gemeinsame Kunststoffbasis und damit eine enge chemische Verwandtschaft und is karant auf diese Weise zu einer Vernetzung der freien reaktiven Enden des Polyamid-Mischpolymerisats mit den Polyamid-Polymeren der Umhüllungsschicht, was eine besonders gute Haftwirkung zur Folge hat. Auch in Bezug auf die Umweltverträglichkeit ist die Stoffkombination bevorzugt, da hier trotz der zusätzlichen Haftschicht noch ein sortenreiner Kunststoff vorliegt, der gut entsorgt werden kann.

Die erfindungsgemäße Vorrichtung, bei der das metallische Bauteil wärmeleitend mit einer elektrischen Heizeinheit verbunden ist, kann derart ausgestaltet sein, dass die elektrische Heizeinheit ebenfalls mit der Umhüllungsschicht umgeben ist. Nach einer bevorzugten Ausgestaltung der Erfindung handelt es sich bei der elektrischen Heizeinheit um eine PTC-Heizeinheit.

Wie bereits erwähnt, handelt es sich bei dem umhüllten metallischen Bauteil um ein fluidführendes Rohr oder um ein Gehäuse der elektrischen Heizeinheit. Auf diese Weise ist auch bei der gleichzeitigen Anwesenheit von elektrischen Strömen und Spannungen einerseits sowie Fluiden andererseits eine hohe und dauerhafte Betriebssicherheit der erfindungsgemäßen Vorrichtung gewährleistet.

In verfahrenstechnischer Hinsicht ist im Zuge bevorzugter Weiterbildungen des erfindungsgemäßen Verfahrens vorgesehen, dass die Haftschicht in flüssiger Form auf das Bauteil aufgebracht wird. Das Aufbringen der Haftschicht kann dabei durch Aufsprühen, Eintauchen, Übergießen, Aufstreichen oder dergleichen erfolgen. Vorteilhafterweise liegt die aufzubringende Schichtdicke dabei zwischen 0,5 mm und 0,05 mm, bevorzugt zwischen 0,2 mm und 0,07 mm.

Aufgrund der haftenden Eigenschaften der Haftschicht wird auf diese Weise im Rahmen der Erfindung eine sehr viel bessere Abdichtung erreicht als bei Vorsehen lediglich einer elastischen Zwischenschicht gemäß dem eingangs zitierten Stand der Technik (EP 1 249 647 A2), deren abdichtende Wirkung nur durch den Einspritzdruck gegeben ist.

Weitere Vorteile und Eigenschaften der Erfindung ergeben sich aus den Ansprüchen und der nachfolgen Beschreibung eines Ausführungsbeispiels anhand der Zeichnung. Es zeigen:
- Fig. 1: einen Längsschnitt für ein eingespritztes Metall- rohr in wärmeleitender Verbindung mit einem PTC- Heizelement und
- Fig. 2: einen Querschnitt entlang der Linie II-II der Fig. 1 des eingespritzten Metallrohres auf Höhe des PTC-Heizelementes.

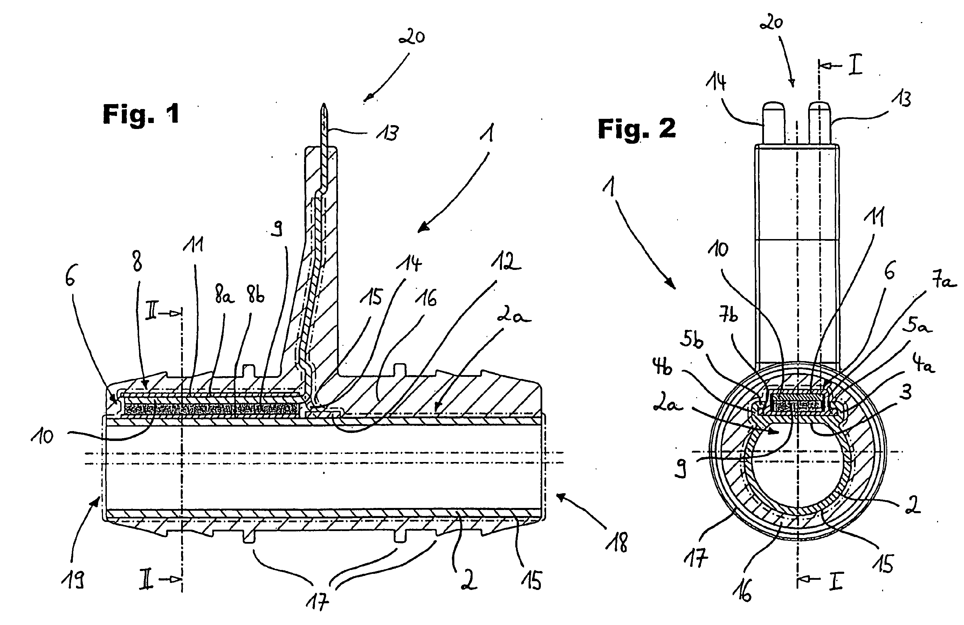

Die beispielhafte Ausführung einer erfindungsgemäßen Vorrichtung zeigt eine Heizeinrichtung 1 in Form eines beheizten Entlüftungsrohres zur Entlüftung des Kurbelgehäuses eines Verbrennungsmotors. Das im Rahmen der Erfindung mit einer Umhüllungsschicht zu umgebende Bauteil ist hier als fluidführendes, speziell gasführendes, Metallrohr 2 ausgebildet. Das Metallrohr 2 ist als Profilrohr ausgeführt, vorzugsweise als Strangpressprofilrohr aus Aluminium oder Kupfer. In seinem oberen Bereich 2a (vergleiche Fig. 2) ist es mit einer Abflachung 3 versehen. In beidseitiger Verlängerung der Abflachung 3 weist das Metallrohr 2 im wesentlichen radial verlaufende Laschen 4a, 4b mit aufeinander zu gerichteten Schenkeln 5a, 5b auf (Fig. 2). Zwischen den Schenkeln 5a, 5b und der Abflachung 3 des Metallrohres 2 ist eine elektrische Heizeinheit 6 über an dieser vorgesehene seitliche Ansätze 7a, 7b klemmend gehalten, so dass die Heizeinheit 6 wärmeleitend mit dem Metallrohr 2 verbunden ist.

Die Heizeinheit 6 weist ein Gehäuse 8 auf, mit dem die besagten seitlichen Ansätze 7a, 7b einstückig verbunden sind. Im Inneren des Gehäuses 8 befindet sich eine geschichtete Anordnung aus einem PTC-Element 9, einer auf dessen Oberseite aufgelegten Kontaktfahne 10 und einer wiederum auf dieser aufgelegten Isolierauflage 11, wobei die genannten Schichten zwischen einer oberen 8a und einer unteren Innenseite 8b des Gehäuses 8 festgelegt sind. Eine zweite Kontaktfahne 12 ist an der Außenseite des Metallrohres 2 im Bereich der Abflachung 3 ebenfalls durch die aufeinander zu gerichteten Schenkel 5a, 5b der seitlichen Laschen 4a, 4b festgeklemmt. Beide Kontaktfahnen 10, 12 weisen senkrecht zum Metallrohr 2, d.h. in radialer Richtung abstehende Anschlussschenkel 13, 14 auf.

Die gesamte Außenfläche der beschriebenen Heizeinrichtung 1, d.h. die Außenseite des Metallrohres 2, die Außenseite der darauf klemmend befestigten Heizeinheit 6 und zumindest der untere Teil der von dieser abstehenden Anschlussschenkel 13, 14 der Kontaktfahnen 10, 12 sind mit einer dünnen Haftschicht 15 überzogen, die in den Figuren 1 und 2 aus Gründen der Darstellung übertrieben dick gezeichnet und vorzugsweise aus einem in Ethanol gelöstem Polyamid-Mischpolymerisat gebildet ist. Die Haftschicht 15 wiederum ist von einer Umhüllungsschicht 16 aus Kunststoff, nämlich Polyamid-Kunststoff, umgeben. Für eine sichere Befestigung von weiterführenden Anschlussschläuchen für den Fluidtransport (nicht gezeigt) an der erfindungsgemäßen Heizeinrichtung 1 weist die Umhüllungsschicht 16 darüber hinaus an ihrer Außenseite eine Anzahl von Rippen 17 auf, durch die ein Herunterrutschen der im Bereich von endständigen Rohröffnungen 18, 19 über das Metallrohr 2 bzw. dessen Kunststoffumhüllung 16 gezogenen Anschlussschläuche verhindert wird.

Die Haftschicht 15 ist erfindungsgemäß beispielsweise derart aufgebracht, dass die Heizeinrichtung 1 am äußeren Ende der beiden Anschlussschenkel 13, 14 gehalten in eine Lösung des Haftschichtmaterials, vorzugsweise in eine alkoholische Lösung eines Polyamid-Mischpolymerisats, eingetaucht wird, wobei die beiden Rohröffnungen 18, 19 geschlossen sind, um ein Eindringen der Lösung in das Innere 2a des Metallrohres 2 zu verhindern. Alternativ kann das flüssige Haftschichtmaterial jedoch auch aufgesprüht oder aufgestrichen oder in sonstiger geeigneter Weise auf das Metallrohr 2 und die damit verbundenen weiteren Bauteile 6, 10, 12 aufgebracht werden. Die Umhüllungsschicht 16 aus Polyamid-Kunststoff ist im Spritzgussverfahren aufgebracht.

Zum Nachweis der dauerbeständigen gas- und flüssigkeitsdichten Eigenschaften der erfindungsgemäßen Verbindung wird ein Prüfaufbau der erfindungsgemäßen Heizeinrichtung 1 im Bereich der Rohröffnungen 18, 19 mit Anschlussschläuchen versehen und anschließend das Metallrohr 2 zu einem Luftdruck von 4 bar beaufschlagt. Im einen Wasserbad ist dann an einem aus der Umhüllungsschicht 16 herausragenden Ende 20 der eingespritzten Anschlussschenkel 13, 14 mindestens eine Minute lang kein Luftaustritt erkennbar, beispielsweise in Form von Bläschen. Dass die Haftschicht 15 sowohl mit dem Bauteil (Metallrohr 2) als auch mit der Umhüllungsschicht 16 eine haftende Verbindung eingeht, lässt sich dadurch verifizieren, dass bei einer anschließenden Längsdurchtrennung der Heizeinrichtung 1 das Metallrohr 2 und die Umhüllungsschicht 16 aneinander haften bleiben und nicht voneinander lösbar sind. Dahingegen fallen bei der Abdichtung unter Verwendung lediglich einer elastischen Schicht gemäß dem Stand der Technik die einzelnen Bestandteile der Heizeinrichtung 1 zumindest im Bereich der Umhüllungsschicht 16 auseinander.

## Patentansprüche

1. Vorrichtung mit
(a) einem metallischen Bauteil (2), welches mit einer elektrischen Heizeinheit (6) wärmeleitend verbunden ist, wobei das metallische Bauteil (2) in Form
- eines fluidführenden Rohres oder
- eines Gehäuses der elektrischen Heizeinheit ausgebildet ist, und
(b) einer das Bauteil (2) im Vesentlichen umgebenden, mit dem Bauteil (2) dichtend verbundenen Umhüllungsschicht (16) aus thermoplastischem Kunststoff, wobei
(c) eine zwischen dem Bauteil (2) und der umspritzten oder spritzgegossenen Umhüllungsschicht (16) angeordnete und zumindest an der Umhüllungsschicht (16) haftende Haftschicht (15) vorgesehen ist, wobei die Umhüllungsschicht (16) eine Polyamidschicht ist und die Haftschicht (15)
- aus einem in Wasser und/oder Alkohol lösbaren Polyamid-Mischpolymerisat oder
- aus einem Hotmelt- Klebstoff auf Polyolefinbasis gebildet ist.

2. Vorrichtung Anspruch 1 **dadurch gekennzeichnet, dass** die elektrische Heizeinheit (6) eine PTC-Heizeinheit ist.

3. Verfahren zum dichtenden Verbinden von
(a) wenigstens einem metallischen Bauteil (2), welches mit einer elektrischen Heizeinheit (6) wärmeleitend verbunden und in Form
- eines fluidführenden Rohres, oder
- eines Gehäuses der elektrischen Heizeinheit
ausgebildet ist, und
(b) einer das Bauteil (2) im Wesentlichen umgebenden Umhüllungsschicht (16) aus thermoplastischem Kunststoff,
wobei
(c) vor einem Aufbringen der Umhüllungsschicht (16) eine zumindest an der Umhüllungsschicht (16) haftende Haftschicht (15) aus einem in Wasser und/oder Alkohol lösbaren Polyamid-Mischpolymerisat oder einem Hotmelt-Klebstoff auf Polyolefinbasis auf das Bauteil (2) aufgebracht wird und
(d) die Umhüllungsschicht (16) nach Aufbringen der Haftschicht (15) als Polyamidschicht durch Umspritzen oder Spritzgießen aufgebracht wird.

4. Verfahren nach Anspruch 3, **dadurch gekennzeichnet, dass** die Haftschicht (15) in flüssiger Form auf das Bauteil (2) aufgebracht wird.

5. Verfahren nach Anspruch 4, **dadurch gekennzeichnet, dass** das Aufbringen der Haftschicht (15) durch Eintauchen, Aufsprühen, Übergießen oder Aufstreichen erfolgt. << in Wasser und/oder Alkohol lösbarem Polyamid-Mischpolymerisat >>

## Claims

1. A device with
(a) a metal component (2) which is connected in a heat conducting manner to an electrical heating unit (6), wherein the metal component (2) is designed in the form
- of a fluid carrying pipe, or
- of a housing of the electrical heating unit, and
(b) a thermoplastic coating layer (16) essentially surrounding the component (2) and connected to the component (2) in a sealing manner,
wherein
(c) an adhesive coating (15) arranged between the component (2) and the coating layer and adhering at least to the coating layer (16) is provided, wherein the coating layer (16) is a polyamide layer and the adhesive layer (15) is formed
- from a polyamide mixed polymer soluble in water and/or alcohol
- from a hot melt adhesive on a polyolefin base.

2. The device according to Claim 1, **characterised in that** the electrical heating unit (6) is a PTC heating unit.

3. A method for the sealing connection of
(a) at least one metal component (2), which is connected in a heat conducting manner to an electrical heating unit (6), and is designed in the form
- a fluid-carrying pipe or
- a housing of the electrical unit, and
(b) a thermoplastic coating layer (16) essentially surrounding the component (2), wherein
(c) an adhesive layer (15), adhering at least to the coating layer (16) and formed from a polyamide mixed polymer soluble in water and/or alcohol or from a hot melt plastic on a polyolefin base, is applied to the component (2) before application of the coating layer (16),
(d) the coating layer (16) is applied as a polyamide layer by over-moulding or injection moulding after application of the adhesive layer (15) as a polyamide layer.

4. The method according to Claim 3, **characterised in that** the adhesive layer (15) is applied in liquid form to the component (2).

5. The method according to Claim 4, **characterised in that** the adhesive layer (15) is applied by immersion, spraying, pouring or spreading.

## Revendications

1. Dispositif équipé de :
(a) un composant métallique (2) relié de façon thermoconductrice à une unité de chauffage électrique (6), le composant métallique (2) prenant la forme :
- d'un tube de guidage de fluide ; ou
- d'un carter de l'unité de chauffage électrique ; et
(b) d'une couche enveloppante (16) en matière plastique thermoplastique entourant pour l'essentiel le composant (2) et reliée de façon étanche au composant (2) ;
(c) une couche d'adhérence (15) étant prévue entre le composant (2) et la couche enveloppante (16) injectée ou moulée par injection et adhérant au moins à la couche enveloppante (16), la couche enveloppante (16) étant une couche de polyamide et la couche d'adhérence (15) étant constituée :
- d'un polymérisat à mélange de polyamide soluble dans l'eau et/ou dans l'alcool ; ou
- d'une colle thermofusible à base de polyoléfine.

2. Dispositif selon la revendication 1, **caractérisé en ce que** l'unité de chauffage électrique (6) est une unité de chauffage CTP.

3. Procédé pour relier de façon étanche :
(a) au moins un composant métallique (2) relié de façon thermoconductrice à une unité de chauffage électrique (6) et prenant la forme :
- d'un tube de guidage de fluide ; ou
- d'un carter de l'unité de chauffage électrique ; et
(b) une couche enveloppante (16) en matière plastique thermoplastique entourant pour l'essentiel le composant (2) ;
(c) une couche d'adhérence (15) adhérant au moins à la couche enveloppante (16), composée d'un polymérisat à mélange de polyamide soluble dans l'eau et/ou dans l'alcool ou d'une colle thermofusible à base de polyoléfine, étant appliquée sur le composant (2) avant application de la couche enveloppante (16) ; et
(d) la couche enveloppante (16) étant appliquée par injection ou moulage par injection sous la forme d'une couche de polyamide, après application de la couche d'adhérence (15).

4. Procédé selon la revendication 3, **caractérisé en ce que** la couche d'adhérence (15) est appliquée sur le composant (2) sous forme fluide.

5. Procédé selon la revendication 4, **caractérisé en ce que** l'application de la couche d'adhérence (15) se fait par immersion, pulvérisation, nappage ou effleurement.
